(19) Europäisches Patentamt
European Patent Office
Office européen des brevets

(11) **EP 4 300 172 A1**

(12) **EUROPEAN PATENT APPLICATION**

(43) Date of publication:
**03.01.2024 Bulletin 2024/01**

(21) Application number: **22182694.4**

(22) Date of filing: **01.07.2022**

(51) International Patent Classification (IPC):
**G02C 13/00** (2006.01)    **G06N 20/00** (2019.01)

(52) Cooperative Patent Classification (CPC):
**G02C 13/003; G02C 13/005; G06N 20/00**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Fielmann AG
22083 Hamburg (DE)**

(72) Inventors:
• **STRUCK, Florian
  22159 Hamburg (DE)**
• **RÜTZEL, Thomas
  22455 Hamburg (DE)**

(74) Representative: **RDL Patentanwälte PartG mbB
Senefelderstrasse 26
70176 Stuttgart (DE)**

(54) **METHOD FOR DETERMINING LENS FITTING PARAMETERS**

(57)    The present invention refers to a computer-implemented method for determining lens fitting parameters used for manufacturing a customised visual defect correction device for a customer, the method comprising at least the following steps:
- retrieving, from a provisioning entity, the PD (198) of the customer,
- retrieving, from a database (100), historical data,
- performing a FH determination method (190) for determining the FH for the customer, the FH determination method depending on and using the retrieved historical data,
- providing and transmitting the FH (195) for the customer and the PD (198) of the customer as lens fitting parameters to a manufacturing facility for manufacturing the customised visual defect correction device for the customer.

FIG. 1

EP 4 300 172 A1

**Description**

FIELD OF THE INVENTION

The invention relates to the field of optics and more specifically it relates to the field of manufacturing lenses for the correction of vision defects.

CONTEXT OF THE INVENTION

Glasses can be used to correct the vision defect of a patient. To manufacture glasses or more specifically to manufacture lenses, lens fitting parameters are necessary. The invention describes a method to determine the lens fitting parameters.

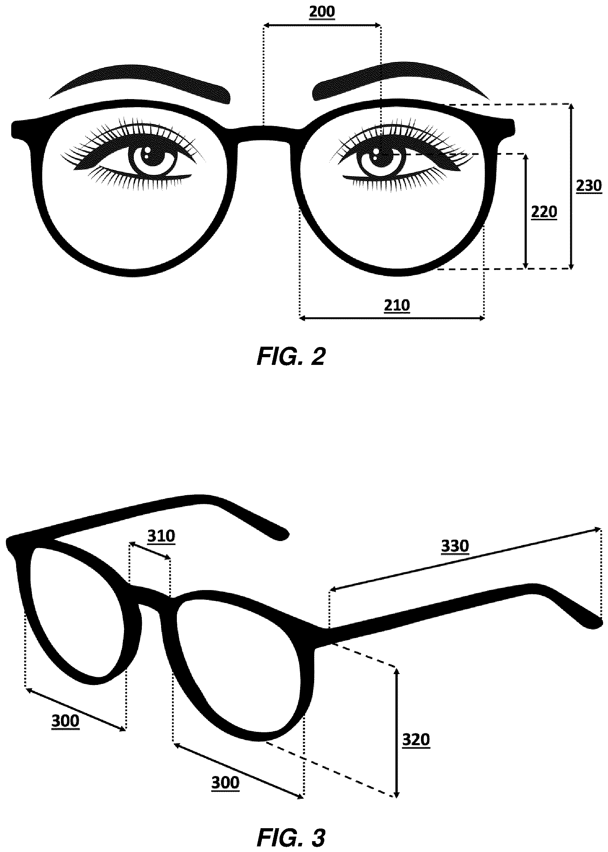

The **lens fitting parameters** describe how the lenses need to be positioned within a frame to correct the vision defect optimally. This position is called optical center of the lens and offers the best imaging quality of the lens. Therefore, the optical center must be centered directly in front of the pupil where a patient would naturally look through. The lens fitting parameters are a combination of the pupillary distance as the horizontal measurement and the fitting height as the vertical measurement. These lens fitting parameters describe where the optical center of the lens related to the frame has to be. This optical center is the point or infinitely small area where the correction of vision is optimal for a patient and where that patient naturally watches through as can be seen in FIG. 2.

**Pupillary distance (PD)** is the distance between the center of the pupil and the center of the nose of the patient, often referred to as monocular pupillary distance (PD) as can be seen in FIG. 2. For the left and right side, the value can be different, as most faces are slightly asymmetrical. For adults the PD is usually a value between 25mm and 40mm, whereas for children this value can be smaller.

**Fitting height (FH)** is the distance between the center of the pupil of the patient to the bottom of the lens in the frame groove. Like the PD, this value is usually given in millimeters. The theoretical minimum value is 0 mm, which would represent the bottom of the lens. The theoretical maximum value can therefore be the height of the lens (VBox).

The lens fitting parameters are usually measured by an optician or someone professionally trained. The PD is individual for the patient, but not depending on a frame. The FH is individual for patient and frame. Multi-focal glasses (e.g. progressive lenses) usually have additional lens fitting parameters that must be measured and considered, which will not be discussed further here.

In the context of the present disclosure some terms are defined as following. More are defined along the description of the invention. Some terms are already used in this terminology and explained later in the description.

**Glasses** is the manufactured frame including the two lenses customized to the patient, also referred to as spectacles or the **visual defect correction device.**

**Lens** is the piece of e.g., glass or plastic which are customized to a patient to be placed into the frame. There are various types of lenses, e.g. single-vision lenses, or multi-focal lenses. Also referred to as **customized lenses.**

**Frame** is the eyewear of e.g., plastic or metal, excluding the lens. The **selected frame** is the frame the patient would like to purchase. For the selected frame the lens fitting parameters need to be determined in order to produce the glasses.

**Patient** is the subject or consumer whose vision defect is to be corrected using glasses, also referred to as **customer.**

**Optician** is a professionally trained person able to measure the lens fitting parameters for a patient.

**Retailer** is the entity selling glasses to patients. The retailer can be the same entity as the manufacturer.

**Manufacturer** is the entity or facility producing the glasses, including grinding the lenses and placing lenses into the frames. The manufacturer can be the same entity as the retailer.

The **vision defect** of a patient can be described in a prescription. Among other values the refractive or refraction error is part of it, e.g., near-sightedness, far-sightedness, astigmatism, and presbyopia. The invention is focused on the fitting of the lens and analyzing the vision defect is not part of the invention.

PRIOR ART

There are multiple methods to measure the lens fitting parameters.

An optician can measure some of the lens fitting parameters with the patient wearing the frame and some without the patient wearing the frame. For this measurement of the lens fitting parameters, the frame usually includes "demo" lenses with a minor vision defect correction. However, this process requires an optician and the patient to perform this measurement together, which is time consuming and inefficient.

In recent years, the digitization of this process became more apparent. The process was a highly manual process in the beginning. The digitization enabled the optician to use a measurement clip attached to the frame. This clip included optical markers/patterns. Subsequently, a computer vision-based measurement utilizes image(s) of the patient wearing the frame and measurement clip to determine the lens fitting parameters.

Another application of this process was made available as a self-service to patients without the need of involving an optician. However, these processes can be rather complex and challenging for patients to conduct. Understanding the process, following the instructions, and therefore taking suitable image(s) can be hard for many users.

Aside from this accessibility problem, other problems are the high software and hardware requirements of this process. The quality of the camera determines the quality of the optical measurement of the lens fitting parameters. Motion sensors and depth methods are particularly crucial to obtain the accurate physical size of objects in the image. The hardware requirements are related to the software requirements. Powerful and stable implementations of face recognition or face tracking are necessary. Furthermore, computer vision-based face tracking is possibly unstable if the camera of the device or the captured people are moving. However, face tracking is often required in the process which in turn makes the computed lens fitting parameters less precise.

High software and hardware requirements also provide a huge challenge in terms of development costs as computer vision-based methods can be very complex. The usage of modern software and hardware can possibly be an improvement but on the other hand are limiting the target group of potential patients who might not have suited devices available, e.g., the True Depth Camera on newer iPhones enables better quality but is only available to a limited number of patients. The hardly accessible workflow makes this process hard to use and limits the target group as well.

Patent documents related to these approaches are i.e., WO 2018/191784 A1, WO 2019/221618 A1 and US 9 529 213 B2. These documents describe methods to use one or multiple images of the patient together with 3D meshes of the frames to calculate the PD and FH. EP 3 182 877 B1, WO 2016/028901 A1, CA 3 098 617 C and US 8 220 922 B2 also describe similar methods to determine the PD and FH by using images of the user. However, the user additionally needs to wear the frame in the image and a reference image of the frame needs to be available. That reference image is then rescaled and matched to the user's image to find the image scale.

The method described in WO 2018/106241 A1 works in a similar way with images of the user but proposes a full system with a moveable camera module to take the images. US 9 395 562 B1 similarly describes a full system, where a measuring device is responsible for taking images while a mobile device is also needed to determine the distance between the user and the measuring device. That distance can be used to find the scale of the image, the PD and, for a specific frame, the FH.

US 8 733 936 B1 describes a method to find frames which will sit well on a patient's face but does not provide the PD or FH. The described method utilizes a database of frame features and images of the user, potentially with a reference object in the image.

US 8 147 063 B2 describes a method to find a better general PD and FH for all people for over-the-counter reading glasses that are not fitted individually . While they use general average values for larger populations they do not provide individualized glasses.

Overall, the prior art often requires specialized hardware, reference objects like the frame to be at hand for the user or involves complex processes including multiple pictures.

The mentioned problems of accessibility, high software and hardware requirements, implementation costs, and size of the potential target group can be addressed by using highly inaccurate methods.

Another example is to apply a factor to the VBox of a frame to estimate the FH. VBox is the vertical height of the lens (if seen from the front of glasses) as one can see FIG. 2. To estimate the FH, the VBox of the frame is multiplied by a constant factor, e.g. $\frac{2}{3}$ . The resulting FH is fixed for an individual frame and therefore not computed individually for each patient..

$$FH = \frac{2}{3} * VBox$$

In conclusion, on one end there are potentially accurate methods which imply a high effort as the patient must go to an optician or tackle a challenging process , while requiring up-to-date software and hardware to gain high precision. On the other end, there are inaccurate methods, e.g., of using a fixed factor to the VBox of a frame which is not individual to the patient.

The objective of the present invention is to determine the lens fitting parameters using a very accessible way while still ensuring a level of accuracy to reliably correct the vision defect of the patient.

SUMMARY OF THE INVENTION

The above-mentioned objective is achieved by the method, the computer program product and the system with the features of the respective independent claims. Further embodiments are presented by the following description and the respective dependent claims.

The present invention refers to a computer-implemented method for determining, using a computer system, lens fitting parameters used for manufacturing a customised visual defect correction device for a customer the customised visual defect correction device comprising a selected frame and customised lenses inserted in the selected frame, and the lens fitting parameters for the customer comprising a pupillary distance, PD, of the customer and a fitting height, FH, for the customer, the method comprising at least the following steps:

- retrieving, from a provisioning entity, the PD of the customer,
- retrieving, from a database, historical data, the historical data being gathered from one or more different data sources and consolidated in one or more historical data items, each historical data item being assigned to a previous customer for a previously customised visual defect correction device and forming a tuple composed of at least a PD; a FH and at least one frame specific feature,
- performing a FH determination method for determining the FH for the customer, the FH determination method depending on and using the retrieved historical data,
- providing and transmitting the FH for the customer and the PD of the customer as lens fitting parameters to a manufacturing facility for manufacturing the customised visual defect correction device for the customer.

Providing and transmitting the FH for the customer and the PD of the customer can also be interpreted in a broader sense. The FH for the customer and the PD of the customer may be automatically transferred to the manufacturer. Alternatively or additionally the FH for the customer and the PD of the customer may be displayed and manually entered into an order form.

According to an embodiment of the proposed method, the method further comprises the step of compiling and providing the database with the historical data.

The invention is focused on determining the FH of a patient using an FH determination method by using the PD of the patient to provide individuality. If the PD is not provided by the patient the invention can be extended with PD determination methods. The invention provides an accessible and accurate method to determine the FH with a data driven methodology. The method presented in the invention can be implemented in a way that it requires minimal input, with low software and hardware requirements and thus is very accessible to consumers and can be used in various contexts. The method determines the FH based on historical data.

The benefits of the invention are briefly the following:

- Minor input from the patient is required
- Simplifies the process to a minimum
- Ensuring a level of accuracy to reliably correct the vision defect of the patient
- Avoid high effort of going to an optician or retailer • Avoid needing up-to-date software and hardware
- Avoid using a complex camera-based process which the patient might not execute correctly
- Avoid needing feature points from the patient's face which might provide privacy issues
- Avoid a virtual frame placement on the virtual face which might not be very reliable
- Wide area of usage, can be used in various situations
- Simple, fast, and reliable to use

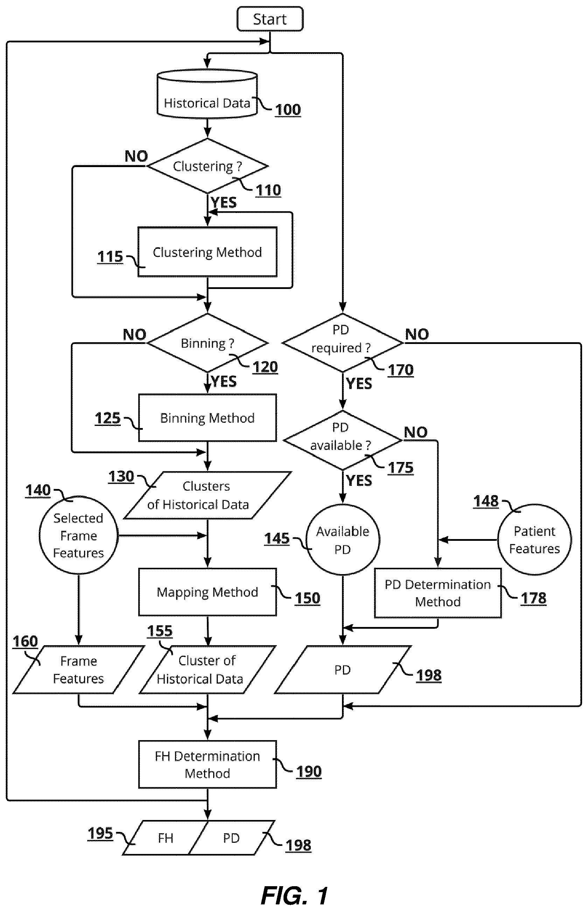

The invention essentially determines the FH using a FH determination method. Depending on the FH determination method, the historical data, frame features of the selected frame and the PD of the customer are required. In this section all the important parts, data entities and methods are described. FIG. 1 is an exemplary flowchart of an implementation of the invention. The structure, order or flow of the steps are not mandatory but flexible. FIG. 1 contains one possible implementation; various other implementations of the invention are possible. However, FIG. 1 shows an example of how the flow of an implementation of the invention can be organized.

The **lens fitting parameters** describe how the lenses need to be positioned within the selected frame to correct the vision defect optimally. This optical center of the lens offers the best imaging quality of the lens. Therefore, the optical center must be centered directly in front of the pupil where the customer would naturally look through. The lens fitting parameters are the combination of the pupillary distance as the horizontal measurement and the fitting height as the vertical measurement. These parameters describe where the optical center of the lens related to the selected frame has to be. This center is the point or infinitely small area where the correction of vision is optimal for the customer and where the customer naturally watches through as it can be seen in FIG. 2.

**Pupillary distance (PD)** is the distance between the center of the pupil and the center of the nose of the customer, often referred to as monocular pupillary distance (PD) as can be seen in FIG. 2. For the left and right side, the value can be different, as most faces are slightly asymmetrical. For adults the PD is usually a value between 25mm and 40mm, whereas for children this value can be smaller. For simplicity, sometimes the binocular PD is used which represents the distance between both pupil centers. As an approximation, the binocular PD can be halved to receive the monocular PD. However, the binocular PD obtained in this way is less accurate especially for asymmetric faces. In the description of the invention, the term PD is used, and the given examples are monocular PD values. However, the invention works mostly the same way when using the binocular PD or e.g., when using the simple approximated conversion mentioned above.

**Fitting height (FH)** is the distance between the center of the pupil to the bottom of the lens in the frame groove. Like the PD, this value is usually given in millimeters. The theoretical minimum value is 0 mm, which would represent the bottom of the lens. The theoretical maximum value can thereforebe the height of the lens (VBox). For the left and right side, the value can be different, as most faces are slightly asymmetrical. The fitting height (FH) depends on how the patient/customer wears the frame, e.g. if it sits lower or higher on the nose, the pose of the head, the direction of view and the situation the glasses will be used in. In the context of the invention, the general term FH is used. There are several notations and specifications for the FH, which can be different depending on the vision defect and lens. Common notations are segment height, optical center height, fitting height. However, the invention works largely the same and is therefore independent of the FH notation/specification. It is required that one notation is consequentially used throughout the implementation of the invention. Nevertheless, conversions between the different notations/specifications are possible and can be considered in the implementation of the invention so that even different notations/specifications can be used. In the given examples the FH values are based on the distance between the pupil center and the bottom line of the lens box as it can be seen in FIG. 2.

Historical Data

**Historical data** include one or more frame features and one or more of the lens fitting parameters. A frame feature could be an identifier for a frame (frame id) and lens fitting parameters are usually PD and FH.

The usual case is to separate lens fitting parameters for **left and right** so that each will be a separate historical data item in the historical data. In this case the monocular PD, e.g. for the left side, where left is the left side of the face from the patient's point of view, is belonging to an historical data item which includes the matching FH for the left side. It is not necessary to differentiate an historical data item to be for the left or the right side when the assumption is that the frame is symmetric . However, values within an historical data item must be consistently for the left or for the right side. Throughout the description of the invention when the terms PD or FH are used the side is ignored. However, this separation into an historical data item holding either holding left or right values is not mandatory, there can be other implementations of the invention treating this separation differently.

TABLE 1: EXEMPLARY HISTORICAL DATA

| Frame Id | PD [mm] | FH [mm] |
|---|---|---|
| 1 | 33.13 | 21.10 |
| 1 | 34.36 | 22.29 |
| 1 | 36.62 | 26.37 |
| 2 | 31.38 | 23.55 |
| 2 | 33.12 | 24.64 |
| 2 | 35.81 | 25.31 |
| 2 | 37.07 | 26.60 |
| 3 | 31.20 | 23.26 |
| 3 | 33.53 | 24.93 |
| 3 | 34.71 | 24.02 |

A **historical data item** is a single entry of one or more frame features and the lens fitting parameters. E.g. in Table 1 a historical data item is a single row of the table. Frame Id is a frame feature which identifies a frame which is further explained below.

Gathering Historical Data

The invention is using a data-driven methodology. The data used in this context is historical data. The historical data is a reference or ground truth that has an influence on the resulting FH of the method of the invention. The historical data can be gathered in various ways. Some examples can be found in the following methods:

- The PD can be measured without the patient wearing a frame.

  ◦ Using a ruler
  ◦ Using specific hardware, e.g., a pupil distance meter
  ◦ Using a software to measure the PD from one or more images

- The FH can be, e.g. measured by an optician of a frame worn by a patient.

  ◦ Drawing lines on the demo lenses of the frame and using a ruler for measurement
  ◦ Using specific hardware
  ◦ Using software to measure the lens fitting parameters from one or more images

- PD and FH can be obtained using a software while the patient is wearing the frame and a clip which includes markers/patterns is mount onto the frame.

- Instead of an optician, the lens fitting parameters can also be measured by a professionally trained person, a non-professional individual, the patient himself or a computer/machine.

Each of these measurements can result in two historical data items. One historical item for the lens fitting parameters for the left side and one for the right side.

According to a further embodiment of the proposed method, the method further comprises the step of compiling and providing the database with the historical data.

**Database** as in the context of the invention is used as a general expression of the data source in which the different data sources are compiled. It must not necessarily be a relational database, e.g., it could also be a file storage or use an entirely different kind of providing the historical data.

Practically a retailer or manufacturer usually has historical data available, since glasses have already been produced and sold. As part of this process a measurement of the lens fitting parameters has been done. Another way to obtain historical data is to conduct a study. The glasses might not actually be produced in this case, but historical data is created by measuring the lens fitting parameters for patients taking part in this study.

Historical data in this context can be understood as a consolidation of data from different sources. E.g., a data source for frame features can be a product catalog containing technical details whereas lens fitting parameters come from a data source of all glasses orders which have been manufactured in the past. A frame id might then be used to join the data.

The data in Table 1 could have been gathered, e.g. by an optician measuring the lens fitting parameters (PD, FH) of a patient. The patient is wearing a previously selected frame which is identified by the frame id.

The invention does not require a specific amount of historical data. Using more historical data can increase the stability of the determination methods. Theoretically, it also works with a few historical data items. As the invention is driven by the historical data, the quality of it needs to be considered. Quality in this sense especially relates to the quality of the measurement which, e.g. an optician has done. Overall it depends on the determination methods used in an implementation of the invention and what target accuracy, stability and flexibility should be achieved.

Frame Features

According to a further embodiment of the proposed method, the at least one frame specific feature is chosen from the group comprising at least: frame ID, gender, frame type, frame colour, frame size, frame width, frame height, frame depth, lens form, lens type, bridge attribute, bridge height, pantoscopic angle, wrap angle, nose pad, frame geometry, product images, technical information of the frame.

**Frame features** include the following features. This list is far from complete and shall be regarded as a list of examples.

- **Frame Id** as an identifier pointing to a specific frame which is unique in its brand, model, size and eventually color. This can be e.g., a product code, SKU, or article number.
- **Gender** as the frame's intended target group, e.g. male, female, unisex.
- **Frame Type** as a general type of frame e.g., metal, plastic, nylor, rimless.
- **Frame Color** as the color of the frame's material, e.g. a red or yellow acetate frame.
- **Frame Size** as the common size convention e.g. 50 - 20 - 150 consisting of the following.

  ◦ **Lens Width** as the horizontal width of one of the frame's lenses (50mm in the example above) as can be seen in FIG. 3.
  ◦ **Bridge Width** as the distance between the two closest points of the two lenses (20mm in the example above) as can be seen in FIG. 3.
  ◦ **Temple Length** as starting by the hinge all the way to where the curve starts to bend behind the ear (150mm in the example above). The temple is the arm on each side of the frame as can be seen in FIG. 3.

- **Frame Width/Height/Depth** as the total width/height/depth of the frame.
- **Lens Form** as the general outline of the lens (e.g. round, oval, square, rectangular).
- **Lens** as the piece of e.g., glass or plastic which are customized to a patient to be placed into the frame. There are various types of lenses, e.g. single-vision lenses, or multi-focal lenses.

  ◦ **HBox** as the horizontal width of the lens usually measured in millimeter (if seen from the front of glasses) as can be seen in FIG. 2.
  ◦ **VBox** as the vertical height of the lens usually measured in millimeter (if seen from the front of glasses) as can be seen in FIG. 2.
  ◦ **Lens Shape** as the accurate geometry of the lens (if seen from the front of glasses). It contains a precise sub millimetric shape of the lens obtained by an optical lens shape tracer.
  ◦ **Distance between lenses** as the absolute distance between the left and right lenses (if seen from the front of glasses).

- **Bridge Attributes** as the bridging element between the lenses, e.g. Saddle Bridge, Keyhole Bridge, and Comfort Fit.
- **Bridge Height** as the horizontal distance between middle of the bridge and the bottom of the lens.
- **Pantoscopic Angle** as the angle between the frame front and the temple (if seen from side).
- **Wrap Angle** as the angle between the two lens planes of the frame (if seen from top).
- **Nose Pad** as the frame's small parts on both sides of the nose which help distributing the weight of the frame. These can be molded out of plastic or e.g., with a small adjustable part of metal. ◦ **Nose Pad Type** as, e.g. Standard, Adjustable Nose Pads.
- **Product Images** as the images of the frame which can be used to gather additional information as physical dimension of individual parts of the frame, e.g. using computer vision-based method.
- **Technical Drawing or Technical Information** as the information created during the design and construction of a frame. It can be used to gather additional information as physical dimension of individual parts of the frame.
- **Frame Geometry** as, e.g. a point cloud in euclidean space intended to describe the physical representation of the frame. Which can, e.g. be obtained from a 3D scan of the frame or a CAD drawing. It can be used to gather additional information as physical dimension of individual parts of the frame. Frame geometry is meant here in a broader sense, e.g. it can be the actual point cloud but also individual measurements from the frame geometry.

Clustering Historical Data

In another embodiment of the proposed method, the method further comprises the step of clustering the historical data, the clustering comprising a grouping, a classification and/or any combination and order of grouping and classification of the historical data.

In the context of this invention, clustering is regarded as an optional step, as also can be seen in FIG. 1. In the case that no clustering must be applied the historical data will be directly handed to a binning method which will be described further below.

Valid clustering methods are, e.g.

- **Grouping** historical data
- **Classification of** historical data
- Any combination and order of grouping, classification

Clustering methods are helping to solve these issues:

- Combining historical data items using one of the clustering methods can lead to having **more historical data items** for a cluster available compared to when treating these individually.
- If **no historical data** is available for a frame, e.g. for a frame which is new and therefore no measurements have been done, adding it to a cluster of historical data which frames can be treated in a similar way (based on one or more frame features) enables determining the FH which would otherwise not be possible (with an empty cluster).

As can be seen in the exemplary implementation of FIG. 1, from this clustered historical data via a mapping method which will be described further below, a certain cluster is selected and then retrieved as historical data and used by the FH determination method. The FH determination method is data-driven and the amount of historical data items in a retrieved cluster is therefore relevant.

In the following sections a few exemplary clustering methods are described. Other methods are possible.

Clustering Method: Grouping

Grouping is a clustering method in the context of this invention. It can be used to combine frames by using one or more frame features.

Given the exemplary historical data in Table 2 the obvious grouping method is to group by **frame id.** Meaning every historical data item with frame id "1" is belonging to the same group. In this example, all frames having the same frame id have the same frame geometry, frame model, frame size and frame color.

TABLE 2: EXEMPLARY HISTORICAL DATA GROUPING

| Frame Id | Frame Model | Frame Size | Frame Color | PD [mm] | FH [mm] |
|---|---|---|---|---|---|
| 1 | Trend | 50 - 20 - 130 | Yellow | 33.13 | 21.10 |
| 1 | Trend | 50 - 20 - 130 | Yellow | 34.36 | 22.29 |
| 1 | Trend | 50 - 20 - 130 | Yellow | 36.62 | 26.37 |
| 2 | Trend | 50 - 20 - 130 | Red | 31.38 | 23.55 |
| 2 | Trend | 50 - 20 - 130 | Red | 35.81 | 25.31 |
| 2 | Trend | 50 - 20 - 130 | Red | 37.07 | 26.60 |
| 3 | Trend | 50 - 20 - 140 | Yellow | 31.20 | 23.26 |
| 3 | Trend | 50 - 20 - 140 | Yellow | 33.53 | 24.93 |
| 3 | Trend | 50 - 20 - 140 | Yellow | 34.71 | 24.02 |

However, in this example **frame model** and **frame size** can be used instead. The two frames with the frame id "1" and "2" have the same frame model "Trend", same frame size "50 - 20 - 130" and represent two frames having the same frame geometry. However, the frame with frame id "1" is "Yellow" and "2" is "Red". The frame with frame id "3" has a different size and is therefore not part of this group and forms another one.

**Frame geometry** in the context of this invention is the spatial shape or form of a frame. Frames having the same geometry have the same three-dimensional size and physical form. However, these frames could e.g. be of different color.

In Table 2, frames within the same group are of the same frame model and frame size, their frame geometry is the same, hence a patient would wear these frames in the same way ultimately resulting in the same FH. The benefit is that the group is consisting of six historical data items instead of just three when grouping by frame id.

Obviously, it largely depends on the available historical data which kind of grouping makes sense. Grouping can be done with any one or more frame features. However, the concept for grouping is that the underlying frame geometry is the same which is the case for the example in Table 2, while the color or other frame features can be different.

Clustering Method: Value-based Classification

Instead of or in addition to grouping, a classification clustering method can be used. While in grouping frames having the same underlying frame geometry are combined, classification extends this by including similar frame geometries. The goal of classification is to find classes of similar frames which can be treated the same. Frames in the same class must not have the same frame geometry as it is the case for a group.

A very simple form of classification is this: given the exemplary historical data in Table 3, the **lens form** can be used to combine all frames having a round lens, respectively oval, square, or rectangular. In Table 3, historical data items with the frame id "1", "2", "3" and "4" could be combined as they all have a lens form of "Round". Historical data items with frame id "5" would then form another class having a "Rectangle" lens form.

TABLE 3: EXEMPLARY HISTORICAL DATA VALUE-BASED CLASSIFICATION

| Frame Id | Frame Model | Frame Size | Lens Form | PD [mm] | FH [mm] |
|---|---|---|---|---|---|
| 1 | Trend | 50 - 20 - 130 | Round | 33.13 | 21.10 |
| 1 | Trend | 50 - 20 - 130 | Round | 34.36 | 22.29 |
| 1 | Trend | 50 - 20 - 130 | Round | 36.62 | 26.37 |
| 2 | Comfort | 50 - 20 - 130 | Round | 31.38 | 23.55 |
| 2 | Comfort | 50 - 20 - 130 | Round | 33.12 | 24.64 |
| 2 | Comfort | 50 - 20 - 130 | Round | 35.81 | 25.31 |
| 3 | Social | 50 - 20 - 130 | Round | 33.12 | 22.21 |
| 3 | Social | 50 - 20 - 130 | Round | 34.45 | 24.53 |
| 3 | Social | 50 - 20 - 130 | Round | 34.82 | 25.40 |
| 4 | Social | 50 - 20 - 140 | Round | 31.20 | 23.26 |
| 4 | Social | 50 - 20 - 140 | Round | 33.53 | 24.93 |
| 4 | Social | 50 - 20 - 140 | Round | 34.71 | 24.02 |
| 5 | Smart | 50 - 20 - 130 | Rectangle | 32.22 | 21.32 |
| 5 | Smart | 50 - 20 - 130 | Rectangle | 34.35 | 22.93 |
| 5 | Smart | 50 - 20 - 130 | Rectangle | 35.12 | 23.12 |

On the other hand, when using **frame size** for classifying historical data items with the frame ids "1", "2", "3" and "5" would be combined as they all have the same frame size of "50 - 20 - 130". Historical data items with frame id "4" form another class having a "50 - 20 - 140" frame size.

Classification by lens form or frame size individually might not make a lot of sense as there might be very different frame geometries and cases where frames having a round lens form can have entirely different bridge types or nose pads which lead to people positioning these frames differently on their nose hence resulting in a possibly different FH.

However, if frame size and lens form are used in combination, classes can also be formed as can be seen in Table 3. Historical data items with the frame id "1", "2", "3" are put into the same class as they all have the same frame size of "50 - 20 - 130" and lens form of "Round". Historical data items with frame id "4" do have a different frame size and ones with frame id "5" have a different lens form, therefore each form their own class. Overall, three classes would be formed in this example.

A problem with a classification like this can be that historical data items with the frame id "1", "2", "3" all have a different frame model, meaning each one can have a possibly different frame geometry. Therefore, this class might not be treatable in the same way, e.g., resulting in the same FH for a given PD. However, for some FH determination methods a classification like this can be useful. It is not hard to see, how extending the range of frame features included in the classification can therefore further improve class building. E.g. the data-driven factor FH determination method, e.g. can provide a factor per class and therefore provide a refined FH instead of a single factor for all frames.

Clustering Method: Score-based Classification

A more advanced method than the value-based classification is the score-based classification. A scoring algorithm is utilized to rank frames by their similarity, foremost by their frame features. Each relevant frame feature can then be ranked by a weighted similarity score and then be summed up for a final similarity score. A similarity score describes how similar two frames are to each other.

There are many frame features which can be useful for classification. A few examples are explained here.

- Bridge Type
- Lens Form
- HBox
- VBox
- Lens Shape
- Frame Size
- Physical Dimensions from technical drawing or frame geometry
- Lens Fitting Parameters

The following formula can be used to calculate the *similarity*. *similarity*$_{ab}$ is the score representing how similar the two frames *a* and b are to each other. *i* identifies the individual frame features indexed from *i* = 0 to *n* - 1.

$$\text{similarity}_{ab} = \sum_{i=0}^{n-1} \text{weight}_i * \text{score}_i \, (\text{framefeature}_{ai}, \text{framefeature}_{bi})$$

similarity: similarity between two frames
weight$_i$: individual weight factor between 0 and 1 for a frame feature i score$_i$: similarity score for a frame feature i
framefeature$_{ai}$: framefeature of frame a on the frame feature i

weight$_i$ is an individual weight factor between 0 and 1, representing the importance of the frame feature framefeature$_i$. Frame features having a high influence such as the lens shape would have a higher weight than e.g., the frame color which might have a low score as its influence on the FH is potentially weak.

score$_i$ is a function specific to a frame feature framefeature$_i$. It is using the value of that framefeature$_i$, therefore framefeature$_{ai}$ for frame a and framefeature$_{bi}$ for frame b. score$_i$ then calculates the similarity score for a frame feature i based on the frame feature i for frame a and frame b.

The function score$_i$ can be very different depending on the frame feature. Here are a few examples of how a score could be calculated for a frame feature.
Bridge type and lens form can be given as non-numerical values which need interpretation. For example, frames having the same **lens form** would have a high similarity score, a frame having a lens form of "Round" compared to "Oval" a lower similarity score, "Round" compared to "Rectangle" even lower.
For numerical values such as for **HBox** and **VBox** the similarity score can be based on their numerical difference. Other **physical dimensions** can be treated similar.
The **lens shape** is much more precise than the lens form, HBox and VBox. Therefore, allowing a more detailed differentiation. It can be utilized to extract even more frame features, e.g., shortest/longest diameter or detailed curvature metrics which allow to compare and rank lens shapes by similarity of their curvature.
Similarly, this can be applied for the **frame size** separating the three components and treating them as individual frame features.
A key to the classification can be on what has been stated before that frames that can be treated similar are intended to form a class. Treated similar can mean that they have similar **lens fitting parameters.** In this case, e.g. if two frames are having a similar average FH (from all of their individual historical data items) these can get a high score.
The resulting similarity$_{ab}$ can then be used to classify the frames, e.g. the higher similarity$_{ab}$ the more similar the two frames a and b are to each other. A classification can then be done on the calculated similarities between every frame and every other frame. A classification could put all frames in a class which have a similarity over a certain threshold. However, there are other methods to do the classification based on the calculated similarity.

Clustering Method: Reverse

The clustering methods presented so far are utilizing one or more frame features for clustering. This can be seen as a forward-facing path. Reverse means in this case directly utilizing the lens fitting parameters, e.g. the FH which is also the result of the FH determination method. A reverse-facing path would be to cluster by the FH values of the individual historical data items. That means in principle to cluster frames which FH values are correlative and therefore can be treated in a similar way.
An even more refined method them using the FH directly is to use an average factor instead of the FH. Which means clustering frames having a similar average factor to the VBox based on the known formula. In this case the historical data items are items of an individual or clustered frame.

$$\text{average factor} = \frac{\sum \text{factors of historical data items}}{\text{Count of historical data items}} = \frac{\sum \frac{FH}{VBox} \text{ of historical data items}}{\text{Count of historical data items}}$$

This can be even further refined by using the average factor(PD), which is considering the PD value. Which then means even across the range of PD values the behavior is correlative and therefore possibly more accurate.

Clustering Method: ML Similar Frame Classification

Instead of manually creating functions to assign the frame classes and frame similarity Machine Learning can be utilized to learn the classes in a supervised manner. For this case, only a reduced number of frames need to be manually assigned to classes (annotated), which form the training set. We can then take any standard classification model (e.g., k-Nearest Neighbours, Decision Tree, RandomForest, Logistic Regression, etc.) can then be used and trained to assign the frame class on basis of the frame features.
To avoid manually labelling a training set of frames with classes, unsupervised learning can be employed to find classes or clusters directly. For this purpose, standard machine learning clustering methods like k-means, agglomerative clustering, gaussian mixture models etc. can be used. For those machine learning clustering methods, the frame features per frame are provided as input to the machine learning clustering model. Depending on the machine learning clustering method the automatic assignment to clusters is based on different comparison or similarity methods, which are often controlled by so called hy-perparameters. The results of the machine learning clustering could provide better results and could for example also model non-linear relations between frames, but the outcome is less clear compared to manually designed clustering rules.

Clustering Method: Further Classification

The given examples illustrate the basic principle. There are various methods to solve classification problems. Especially in the field of machine learning there are models which solve classification problems in a more sophisticated way.

Clusters of Historical Data

The result of applying none, one or more clustering methods to the historical data is referred to as clusters of historical data in the context of this invention as can be seen in FIG. 1. A cluster of historical data is a group and/or class of historical data, so one or more individual historical data items are combined using grouping and/or classification into a cluster.
Table 2 contains an example of historical data grouped into two clusters. Table 3 contains an example of classification into three clusters. A combination of grouping and classification is valid, e.g., grouping the same frame geometries as in Table 2 and afterwards applying a score-based classification. In this case, the order of applying grouping first and then classification is useful. Grouping would be done by frames having the same frame geometry, but eventually different colors, classification would then combine similar frames. Depending on the implementation of the invention the order or the applied clustering methods can be different.

Binning Method

In still a further embodiment of the proposed method, the method further comprises the step of binning the historical data into a plurality of bins, each bin being assigned to a PD value, the PD value being a discrete value.
The difference of the binning method compared to a clustering method like grouping and classification is that it is not changing the frames relationship to a cluster. It is rather used to bin historical data items having a similar PD. As the FH is for some FH determination methods (like median, average) depending on the PD, binning can be useful to have more historical data items available for a specific PD. If binning is used at all or whether it is useful depends on the FH determination method. For the average FH determination method binning is used, e.g. regression or machine learning FH determination methods possibly work better if binning is not used.
Table 4 contains exemplary historical data for an individual frame which is identified with the frame id 1. There are nine historical data items for various continuous PD values. To combine multiple historical data items into a bin, binning is applied to the PD. Table 5 contains the result of a binning with a binning interval of 1 which results in with PDs of 33 mm, 34 mm, and 35 mm. In this example the PD values are discrete, rounded to integer values.

Depending on the available historical data and used FH determination method, other binning intervals can be used. E.g., for 0.5 it would lead to PD bins of 33.0 mm, 33.5 mm, 34.0 mm, 34.5 mm, 35.0 mm, 35.5 mm.

This method can be used to simplify the lookup by combining historical data items with the same frame id and PD in a bin, as can be seen below when using the average FH determination method. The binning method is used here as a pre-processing method, but it can be used in various ways in the process, e.g., it could also be done prior to clustering or as part of the FH determination method, which can be useful when combining multiple FH determination methods.

TABLE 4: EXEMPLARY HISTORICAL DATA

| Frame Id | PD [mm] | FH [mm] |
|---|---|---|
| 1 | 32.83 | 21.10 |
| 1 | 33.36 | 22.29 |
| 1 | 33.42 | 26.37 |
| 1 | 33.82 | 23.55 |
| 1 | 34.32 | 24.64 |
| 1 | 34.41 | 25.31 |
| 1 | 34.97 | 26.60 |
| 1 | 35.20 | 23.26 |
| 1 | 35.43 | 24.93 |

TABLE 5: EXEMPLARY BINNED HISTORICAL DATA

| Frame Id | PD [mm] | FH [mm] |
|---|---|---|
| 1 | 33 | 21.10 |
| 1 | 33 | 22.29 |
| 1 | 33 | 26.37 |
| 1 | 34 | 23.55 |
| 1 | 34 | 24.64 |
| 1 | 34 | 25.31 |
| 1 | 35 | 26.60 |
| 1 | 35 | 23.26 |
| 1 | 35 | 24.93 |

Mapping Method

In another embodiment of the proposed method, the method further comprises the step of matching frame features of the selected frame and/or patient features of the customer to one or more of the historical data items.

The mapping method is responsible for selecting and retrieving a single cluster of historical data out of all clusters of historical data. This mapping is based on one or more frame features of the selected frame. The mapping method is optional. In case no mapping method is applied, the selected and retrieved cluster of historical data could, e.g., be all clusters of historical data.

In another embodiment of the proposed method, the method further comprises performing the FH determination method on a selected cluster of the historical data, the cluster of historical data being selected by one or more frame features of the selected frame.

**Selected frame** is the frame selected by the customer for which the lens fitting parameters need to be determined. The **selected frame features** are the frame features of the selected frame.

The resulting **cluster of historical data** is also referred to as **selected cluster of historical data.**

**Request** is used in the context of the invention as the request to determine the lens fitting parameters for the selected frame. To a request belong the selected frame features which can be, e.g. the frame id. E.g. for the example in Table 3 a request with a selected frame with the frame id "1" would use the first cluster of historical data items with the frame id "1", "2", "3" as this contains the frame id "1". The resulting cluster of historical data is shown in Table 6.

TABLE 6: EXEMPLARY CLUSTER OF HISTORICAL DATA

| Frame Id | Frame Model | Frame Size | Lens Form | PD [mm] | FH [mm] |
|---|---|---|---|---|---|
| 1 | Trend | 50 - 20 - 130 | Round | 33.13 | 21.10 |
| 1 | Trend | 50 - 20 - 130 | Round | 34.36 | 22.29 |
| 1 | Trend | 50 - 20 - 130 | Round | 36.62 | 26.37 |
| 2 | Comfort | 50 - 20 - 130 | Round | 31.38 | 23.55 |
| 2 | Comfort | 50 - 20 - 130 | Round | 33.12 | 24.64 |
| 2 | Comfort | 50 - 20 - 130 | Round | 35.81 | 25.31 |
| 3 | Social | 50 - 20 - 130 | Round | 33.12 | 22.21 |
| 3 | Social | 50 - 20 - 130 | Round | 34.45 | 24.53 |
| 3 | Social | 50 - 20 - 130 | Round | 34.82 | 25.40 |

Another example given Table 2; if the following selected frame features are given for a request: Frame Model: "Trend", Frame Size: "50 - 20 - 140" and Frame Color: "Red". The mapping method would then select a matching cluster, in this example based on the frame model and frame size, ignoring the frame color and would only pass this cluster of historical data to the FH determination method. In this case, the matching cluster is the second group as the Frame Model and the Frame Size were used for grouping and therefore determine the group.

FH Determination

The method to determine the FH is rather free to choose. It largely depends on which data is available and what method works best in each situation. The core principle is that historical data is used to determine a resulting FH. Among others here are a few example methods which can be used. The following methods require an explanation which is presented in the following sections.

- **Average**
- **Data-Driven Factor**
- **Regression** (e.g. Linear, Curve Fitting)
- **Machine Learning Model** could be trained with historical data
- Any **combination** of above FH determination methods

In another embodiment of the proposed method, performing the FH determination method comprises using the FH, and at least one frame feature from the retrieved historical data items and utilizing the frequency distribution of the FH in the retrieved historical data to determine the FH for the customer from at least one frame feature of the selected frame.

In another embodiment of the proposed method, performing the FH determination method comprises using a relationship between PD and FH, and at least one frame feature from the retrieved historical data items and utilizing the frequency distribution of the FH in the retrieved historical data to determine the FH for the customer from at least one frame feature of the selected frame and the PD.

FH Determination Method: Average

A valid FH determination method of the invention is to average over historical data items of a cluster with the same frame id and the same binned PD. As described above, the binning method is used to enlarge the available data for a certain PD.

$$FH = \frac{\sum FH \text{ of historical data items}}{\text{Count of historical data items}}$$

In another embodiment of the proposed method, performing the FH determination method comprises averaging over all retrieved historical data items that have the same PD and at least one same frame specific feature, averaging can also be replaced by another statistical method, comprising at least the following: Median, K Nearest Neighbors, Tree Models, Bagging, Random Forest, and Boosting.

Table 5 shows exemplary binned data. For a frame with frame id "1" and a PD of 33 mm the table shows three historical data items with FH values of: 21.10 mm, 22.29 mm, and 26.37 mm. The method calculates the average of these values, which leads in this case to an FH of 23.25 mm, calculated as following:

$$FH = \frac{(21.10 \text{ mm} + 22.29 \text{ mm} + 26.37 \text{ mm})}{3} = 23.25 \text{ mm}$$

Considering each combination of frame id and PD in Table 5, this leads to the results shown in Table 7. E.g., a given frame id of "1" and PD of 34 mm would result in a determined FH of 24.5 mm, a given frame id of 1 and PD of 35 mm it would result in an FH of 24.93 mm.

TABLE 7: AVERAGE FH

| Frame ID | PD [mm] | FH [mm] |
|---|---|---|
| 1 | 33 | 23.25 |
| 1 | 34 | 24.5 |
| 1 | 35 | 24.93 |

Another example for the average method using a different clustering is, e.g. by using the lens form, and depending on the PD. For that, the historical data items are clustered by lens form and a binning method is applied to the PD. Based on the data of Table 3, a request for a lens form of "Round" and a binned PD of 33 mm with a binning interval of "1" leads to a FH of 23.22:

$$FH = \frac{(21.10 \text{ mm} + 24.64 \text{ mm} + 22.21 \text{ mm} + 24.93 \text{ mm})}{4} = 23.22 \text{ mm}$$

Alternatively, to the binning method a PD interval can be used. That means that not only historical FHs with the exact same PD are used but also where the PD is within an interval of, e.g. $\pm$ 1mm. E.g., for a request with a PD of 34 mm, this method averages over all historical data with a PD of 33 mm to 35 mm. Given the FH of average, the already averaged data of Table 7, which includes the average over a certain binned PD, this request leads to a FH of 23.64 mm.

$$FH = \frac{\sum FH \text{ of average}}{\text{Count of averages}}$$

$$FH = \frac{(23.25 \text{ mm} + 24.5 \text{ mm} + 24.93 \text{ mm})}{3} = 24.23 \text{ mm}$$

Alternatively the PD interval can be done over such non-binned historical data as in Table 6. In this case the historical data items which are within the PD interval of 33 mm $\pm$ 1mm would be used.

As an extension to the average or mean method, a trimmed mean can be used. A trimmed mean removes a small percentage of the smallest and largest values before calculating the mean. Removing the smallest and largest values eliminates the impact of outliers.

The benefits of the average FH determination method are:

- Rather simple determination of the FH
- High accuracy (especially with high constraints)

The drawback is that a statistically significant number of historical data items is needed.

The average method can be used as an ultimate fallback. In this case the historical data does not even need to contain any frame features. E.g. the average FH determination method can still be used; it then can just be based on the FH, in that case it would be the average over all historical data items.

Obviously other statistical methods can be used in a similar manner. Other examples for statistical methods are e.g., Median, K Nearest Neighbors, Tree Models, Bagging, Random Forest, and Boosting. To give an example about the median; the only difference is that instead of calculating the average over all data with the same PD and frame feature(s), the method calculates the median. The median is the data value separating the upper half of a data set from the lower half. To calculate the median, the invention follows these steps:

- Arrange data values from lowest to highest value
- The median is the data value in the middle of the set
- If there are 2 data values in the middle the median is the mean of those 2 values

For example, for a dataset including 21 mm, 22 mm and 26 mm for the FH value, a resulting FH of 22 mm will be determined for a given frame id of "1" and a PD of 33 mm.

In another embodiment of the proposed method, performing the FH determination method comprises calculating the median from all retrieved historical data items that have the same PD and at least one same frame specific feature.

Following the average method, the median method can be used together with the PD interval extension and a calculation using clustered historical data.

The benefits and drawbacks are the same as for the average method. If outliers are present, the invention prefers to use median instead of average. If the distribution is rather symmetric the average method does lead to better results.

FH Determination Method: Data-Driven Factor

This FH determination method builds on the state of the art, which applies a factor of, e.g. $\frac{2}{3}$ to the VBox to determine the FH. The factor describes the relation between the FH and the VBox.

$$FH = factor * VBox$$

For an historical data item having a VBox of 33 mm, and a factor of $\frac{2}{3}$ leads to an FH of 22 mm:

$$FH = \frac{2}{3} * 33 \text{ mm} = 22 \text{ mm}$$

Instead of using a constant factor, e.g. $\frac{2}{3}$, this method refines the principle to utilize a data-driven factor based on historical data, which is not roughly estimated and defined, but determined in a data-driven way, leading to a more accurate overall determination of the FH. The factor for a historical data item can be calculated using this formula:

$$factor = \frac{FH}{VBox}$$

In another embodiment of the proposed method, performing the FH determination method comprises calculating a data-driven factor based on the retrieved historical data and determining the FH by multiplying the calculated data-driven factor with the vertical height of the lenses, the VBox.

The data-driven average factor over a number of historical data items can be calculated with the following

formula:

$$\text{average factor} = \frac{\sum \text{factors of historical data items}}{\text{Count of historical data items}} = \frac{\sum \frac{FH}{VBox} \text{ of historical data items}}{\text{Count of historical data items}}$$

Given the example historical data items of Table 8 this leads to a data-driven average factor of 0.73.

$$\text{average factor} = \frac{\left(\frac{21.10 \text{ mm}}{30.13 \text{ mm}} + \frac{22.29 \text{ mm}}{30.13 \text{ mm}} + \dots + \frac{23.26 \text{ mm}}{34.35 \text{ mm}} + \frac{24.93 \text{ mm}}{35.12 \text{ mm}}\right)}{9} = 0.73$$

TABLE 8: EXEMPLARY HISTORICAL DATA WITH VBOX

| Frame Id | VBox [mm] | FH [mm] |
|---|---|---|
| 1 | 30.13 | 21.10 |
| 1 | 30.13 | 22.29 |
| 2 | 34.36 | 26.37 |
| 2 | 34.36 | 23.55 |
| 2 | 34.36 | 24.64 |
| 3 | 31.76 | 25.31 |
| 4 | 33.85 | 26.60 |
| 5 | 34.35 | 23.26 |
| 6 | 35.12 | 24.93 |

In addition, a valid variant of the data-driven factor FH determination method is to determine a factor for each cluster. Having a different factor for each cluster tends to a more accurate FH, e.g. frames with narrow bridges might lead to larger factors, whereas frames with wide bridge types tend to have smaller FHs.

To provide a better level of individuality to the FH, the PD can be used to determine the FH. This would lead to not only having a single FH for a frame but having an individual FH for each binned PD value. Determining a data-driven factor depending on the PD is another valid variant of the data-driven factor FH determination method.

The following shows some exemplary calculations of the dependent factors based on the data in Table 9. Whereas only the averages are calculated here, it is also possible to determine a curve for the data-driven factor depending on the PD similar to the regression FH determination method.

TABLE 9: EXEMPLARY HISTORICAL DATA WITH VBOX, LENS FORM AND BINNED PD

| Frame Id | VBox [mm] | Lens Form | PD [mm] | FH [mm] |
|---|---|---|---|---|
| 1 | 30.13 | Round | 32 | 21.10 |
| 1 | 30.13 | Round | 33 | 22.29 |
| 2 | 34.36 | | Rectangle 34 | 26.37 |
| 2 | 34.36 | Rectangle | 33 | 23.55 |
| 2 | 34.36 | Rectangle | 30 | 24.64 |
| 3 | 31.76 | Round | 34 | 25.31 |
| 4 | 33.85 | Round | 34 | 26.60 |
| 5 | 34.35 | Rectangle | 33 | 23.26 |
| 6 | 35.12 | Rectangle | 30 | 24.93 |

The exemplary data-driven average factor over historical data items based on the PD can be calculated using this formula:

$$\text{average factor(PD)} = \frac{\sum \text{factors of historical data items (PD)}}{\text{Count of historical data items (PD)}}$$

$$= \frac{\sum \frac{\text{FH}}{\text{VBox}} \text{ of historical data items (PD )}}{\text{Count of historical data items (PD)}}$$

Given the exemplary data in Table 9 this leads to an average factor of 0.701 using the cluster of historical data items with a PD of 33 mm.

$$\text{average factor(33 mm)} = \frac{\frac{22.29 \text{ mm}}{30.13 \text{ mm}} + \frac{23.55 \text{ mm}}{34.36 \text{ mm}} + \frac{23.26 \text{ mm}}{34.35 \text{ mm}}}{3} = 0.701$$

The exemplary data-driven average factor over historical data items of a cluster which is based on, e.g. a certain frame feature, can be calculated using this formula:

$$\text{average factor(frame feature)} = \frac{\sum \text{factors of historical data items (frame feature)}}{\text{Count of historical data items (frame feature)}}$$

$$= \frac{\sum \frac{\text{FH}}{\text{VBox}} \text{ of historical data items (frame feature )}}{\text{Count of historical data items (frame feature)}}$$

Given the exemplary data in Table 9 this leads to an average factor of 0.756 using the cluster of historical data items with the lens form frame feature of "Round".

$$\text{average factor(lens form: Round)} = \frac{\frac{21.10 \text{mm}}{30.13 \text{mm}} + \frac{22.29 \text{mm}}{30.13 \text{mm}} + \frac{25.31 \text{mm}}{31.76 \text{mm}} + \frac{26.60 \text{mm}}{33.85 \text{mm}}}{4} = 0.756$$

The benefits of this FH determination method are:

- Easy and general determination of the FH
- Can also be applied if not a lot of or even no data for a PD and for a certain frame is available.

The drawback is that the VBox is needed as part of the historical data.

FH Determination Method: Regression

For determining the FH, a further possible FH determination method performs a regression using the historical data. More specific, a function of the following form is fitted to the historical data. The underlying historical data can, e.g. contain data like in Table 1.

$$\text{FH} = \text{f(PD)}$$

In another embodiment of the proposed method, performing the FH determination method comprises performing a regression using the retrieved historical data, particularly a function $FH = f(PD)$ is fitted to the retrieved historical data.
The regression can be either linear or polynomial. In linear regression, the relationships are modelled using linear predictor functions whose unknown model parameters (a, b) are estimated from the data:

$$FH = a * PD + b$$

In polynomial regression, the predictor function has the following form with the unknown model parameters ($a_0$, $a_1$, ..., $a_n$):

$$FH = a_0 + a_1 * PD + a_2 * PD^2 + \cdots + a_n * PD^n$$

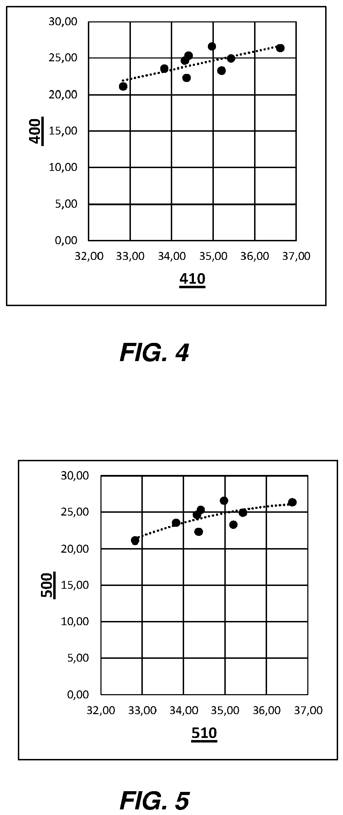

Pre-implemented solvers can be used to determine the coefficient of the prediction. An illustration of example data of Table 4 for the frame id "1", a fitted linear curve and a curve of the $2^{nd}$ degree (polynomial regression), can be found in FIG. 4 and FIG. 5. The polynomial regression would e.g., predict an FH of 25 mm for a PD of 35 mm.

Regression can be performed after any of the clustering and binning steps described previously.

The advantage of regression is that good results can be achieved even for rather small and large PDs, as these PD values are usually underrepresented in the historical data as not many patients have such PD values. In addition, for unusual PDs that lie outside of common discrete steps, the method determines valid results in most cases. The drawback is that regression can only be performed if the number of available historical data items are statistically significant. Other examples for regression methods are Simple Linear Regression, Multiple Linear Regression, Weighted Regression.

FH Determination Method: Machine Learning

The described methods, to explicitly model the relationship between PD and FH over clusters of similar frames, can be refined further and extended by employing Machine Learning to automatically learn the relationship from the historical data. To this end a Machine Learning model is trained on the historical data to predict the FH from the PD, the frame features and optionally the patient features would be used as input. The inputs may be pre-processed with the described pre-processing methods (e.g., the frame cluster can be added as an additional frame feature) and further standard pre-processing methods for Machine Learning may be performed.

In another embodiment of the proposed method, performing the FH determination method comprises using a relationship between PD and FH, and at least one frame feature from the retrieved historical data and using a trained machine learning model to determine the FH for the customer from at least one frame feature of the selected frame and the PD.

Depending on the used Machine Learning model, complex, non-linear relationships between the PD, frame features, patient features and the FH can be learned, which can be hard to find and express manually with the clustering and binning approaches. Such learned relationships from the Machine Learning approach can be advantageous in the following terms:

- Providing more precise predictions
- Providing predictions for frames with or without insufficient historical data available as similarities of frames are implicitly modelled on basis of frame features
- Similar to regression it can provide good results for rather small and large PDs when those areas are covered well in the training data

Meanwhile, it is important to have enough historical data available for the Machine Learning approach to cover the full range of possible values for the PD and the frame features to enable the training of a reliable model. Otherwise, the model might provide unexpected results for unexpected or unseen inputs, especially as non-linear models are harder to interpret than e.g., a regression model.

Combining FH Determination Methods

As part of the invention, it is intended that FH determination methods can be combined and thus forming a further FH determination method, for instance combining the average method with the data-driven factor method as a fallback in case e.g., a statistically significant number of historical data items are not available in a selected cluster.

Given Table 5, which contains exemplary historical data with a binned PD. A determination of the FH with the average method does work properly for PDs between 33 mm and 35 mm. For PDs lower than 33 mm or higher than 35 mm, no historical data items are found. Therefore, in those cases the data-driven factor method can be used as a fallback, which can use a general factor and the VBox of a frame to determine the FH.

The combination of FH determination methods can have multiple levels including multiple FH determination methods.

The invention prefers to use the most accurate approach, which relies on very detailed historical data in the cluster (e.g., average grouped by frame id and a binned PD), and fallbacks to less accurate methods in case not enough data or no frame features (e.g., lens form, frame features) are available.

Combining FH determination methods can be complex. As mentioned before, depending on the method each FH determination method can require a different clustering method and/or binning method. Therefore, a fallback FH determination method can use a different mapping than the standard FH determination method and can then be mapped to a different cluster based on the given frame features. For the flowchart in FIG. 1 that means that possibly the whole process must be executed for each FH determination method. Parts of it can be reused, e.g. if the PD has already been determined using a PD determination method it would not have to be done again.

Usage of Patient Features

**Patient features,** i.e. customer features include the following features. This list is not complete and shall be seen as a list of examples.

- **Image of the patient** is an image of the face of the customer. Depending on the patient features to get from the image, certain constraints apply to the image. E.g., the customer must look directly into the camera or exactly above the camera into the far distance and the face must be in the center of the image. Such an image could be used to extract certain patient features, like face feature points for eye, ears, nose etc.
- **Video of the patient:** A video can be used in the same way as an image of the patient to extract face features.
- **3D scan of the patient/customer.** A detailed 3D point cloud or 3D geometry can be used to extract further patient features.
- **Age** of the patient/customer. The age does influence the average PD and FH.
- **Gender** of the patient/customer. The gender does influence the average PD and the FH.
- **Nose form** is the general outline of the nose (e.g., flat, hooked, snub). The nose form does influence the FH.
- **Prescription values** represent, e.g. diopters, the unit used to measure the strength of the corrective lens.

The patient features can be used for the PD determination and the FH determination as additional features to get accurate results. The image-based PD determination method requires either an image or a video of the customer. The chapter "Determine PD" explains possibilities to use patient features in the PD determination.

In another embodiment of the proposed method, performing the FH determination method comprises using at least one further feature of the customer, particularly an image of the customer, a video of the customer, 3d scan of the customer, the age of the customer, the gender of the customer and/or a nose form of the customer.

Additionally, patient features can be used for the FH or the PD determination in addition to frame features and historical data to improve the FH and/or PD. Especially, age and gender do have an impact on the PD and e.g., can be used to provide a better average for a cluster of historical data.

The invention proposes to use patient features also for FH determination. Just like using frame features, patient features are mostly required as part of the historical data and individually from the customer as part of a request. Historical data including patient features could look like Table 10, where age and gender are part of the historical data.

TABLE 10: HISTORICAL DATA INCLUDING PATIENT FEATURES

| Fr Id ame | Age | Gender | PD [mm] | FH [mm] |
|---|---|---|---|---|
| 1 | 22 | Female | 33.13 | 21.10 |
| 1 | 17 | Female | 34.36 | 22.29 |
| 2 | 68 | Female | 31.38 | 23.55 |
| 2 | 45 | Female | 33.12 | 22.64 |
| 3 | 42 | Male | 34.45 | 28.53 |
| 2 | 23 | Male | 33.89 | 26.12 |
| 3 | 43 | Unisex | 30.34 | 22.21 |
| 3 | 24 | Unisex | 34.82 | 25.40 |

This data is processed based on the same steps as the usual historical data: clustering, binning, and mapping.

The clustering method grouping based on the gender and binning leads for example to the following clustered historical data in Table 11.

TABLE 11: CLUSTERED HISTORICAL DATA BASED ON PATIENT FEATURES

| Frame Id | Age | Gender | PD [mm] | FH [mm] |
|---|---|---|---|---|
| 1 | 22 | Female | 33 | 21.10 |
| 1 | 17 | Female | 34 | 22.29 |
| 2 | 68 | Female | 31 | 23.55 |
| 2 | 45 | Female | 33 | 22.64 |
| 3 | 42 | Male | 34 | 28.53 |
| 2 | 23 | Male | 33 | 26.12 |
| 3 | 43 | Unisex | 30 | 22.21 |
| 3 | 24 | Unisex | 34 | 25.40 |

Based on the clusters and the patient features of the customer, the same mapping and the same FH determination methods as described before can be applied.

For the example historical data in Table 11, the method could for instance perform a prediction for a female customer with a PD of 33 and a so far unknown frame id 4 using the average FH determination method utilizing all historical data, which leads to an FH of 21.87 mm.

$$FH = \frac{(21.10 \text{ mm} + 22.64 \text{ mm})}{2} = 21.87 \text{ mm}$$

Another method to utilize patient features is to apply a constant factor to the estimated FH or PD based on the age or gender information. E.g., on average females do have a smaller PD and FH. But the invention hardly takes this information into account so far. A constant factor can help to get rid of this consistent error. Assuming that the gender information is missing in Table 11, the invention could, e.g. for a female customer with a PD of 33 mm and a so far unknown frame id "4":

•    Calculate the *FH* with the average FH determination method based on a cluster with the same PD, and
•    Apply a constant factor (e.g., 0.95) afterwards, this factor could be determined in a study or using a smaller subset of the historical data where the gender information is given.

For the example in Table 11 this results in an FH of 22.12 mm.

$$FH = \frac{(21.10 \text{ mm} + 22.64 \text{ mm} + 26.12 \text{ mm})}{3} * 0.95 = 22.12 \text{ mm}$$

Also, the patient prescription values could be used to improve the FH determination methods. The invention is based on historical data as a ground truth and the ground truth possibly was mostly measured by opticians. Therefore, the accuracy of these opticians' measurements highly influences the FH determination and accuracy. Opticians typically measure the FH more precise for patients with higher diopters as acceptable tolerances are higher for lower diopter values. Therefore, for example the FH determination methods could only include historical data of patients with e.g. more than 4 diopters. That would result in more accurate predictions.

The benefits of patient features are:

•    Combining historical data based on patient features using one of the clustering methods leads to having **more historical data** for a cluster available.
•    If **no historical data** is available for a frame (e.g., for a new frame) or for a patient (e.g., young customer), putting it into a group/class of patients who are similar enables determining the FH which would otherwise not be possible.
•    Very general estimation methods, such as average PD, are improved by using patient features.

- Improve fitting by considering consistent errors based on patient features.

The drawback is that including the patient features makes the method more complex.

Usage of other Lens Fitting Parameters

There are other lens fitting parameters, e.g. pantoscopic tilt, vertex distance, wrap angle (or face form angle), or reading distance. The methods of this invention can potentially be adapted and applied to these lens fitting parameters in a similar way.

E.g. one or more of these lens fitting parameters can be part of the historical data and an adapted average or data driven "FH" determination method can be used to determine, e.g. an average pantoscopic tilt for a request.

PD Determination

Some FH determination methods require the PD of the customer. It is not required by every method as e.g., when using a simple variant of the data-driven factor FH determination method only the VBox of a frame is required. Consequently, when using that method the PD would not have an influence on the resulting FH.

According to a further embodiment of the proposed method, the method further comprises the step of retrieving, from a provisioning entity, a pupillary distance of the patient / customer,

**Provisioning entity** is the instance providing the PD of the customer. This either can be from a PD being available or a PD determination method as described below.

PD Available

If the PD is required by the FH determination method, it could be for instance provided in the following ways:

- Patient providing his/her PD value, e.g. by knowing it, reading it off from the last order or eyeglass prescription.
- Optician, retailer, or manufacturer stored it in the patient's account or has it available from the patient's previous orders or a preceding step.

The options listed above would be the options the patient can actively provide a PD, or an existing PD can be attributed to the patient. If these options are not available, a PD determination method can be used.

The determination of the PD is not explained in such detail as part of this invention as it is primarily focused on the FH. However, making the determination of the PD part of an implementation of the invention is useful because most FH determination methods depend on the PD. Similar methods as for the determination of the FH can be utilized for determining the PD including clustering methods, binning, and some of the FH determination methods e.g., average, median, and data-driven factor. Some examples are provided below.

PD Determination Method: Data-Driven

A PD can be determined using statistical methods on the historical data. Historical data contains the lens fitting parameters, it can contain more specifically the PD. Based on these values, a PD value could be statistically determined for the patient/customer.

- A statistical PD value can be determined based on historical data. E.g. it could be the average PD across available historical data.
- Another more refined way would be to provide a data-driven PD value based on patient features such as the gender and/or age. E.g. the average PD would then only be taking historical data of a certain gender into account and provide an average PD for each gender.

PD Determination Method: Image-based

To improve the accuracy over the data-driven PD determination method, various methods based on patient features can be used. Patient features in this case is one or multiple photos of the customer's face as described before. All methods to detect the PD from an image at least involve the extraction of facial landmarks to find the pupil center points and the determination of a scaling factor to translate the distance between the pupil center points from pixels to millimeters.

The following approaches can be used to determine the scaling factor:

- Using the average iris size as reference: The size of the iris varies only slightly and can therefore be used as a reference object. By extracting the diameter of the iris from the facial landmarks and comparing them to the average iris size in millimeters the necessary scaling factor results to translate pixel distances to millimeter distances. This approach does not rely on specialized hardware or additional steps from the user except for the photo.
- If available, the information from a depth camera can be used (e.g., iPh-one X or newer with a True Depth Camera) and together with the intrinsic parameters of the camera calculate the scale of a pixel at the depth of the face.
- Using an ID card, credit card or another known object as reference: Similar to the iris size approach we can use an object with a known size to find the scaling factor. The user/customer needs to hold the object close to the eyes in a similar distance to the camera as the eyes
- Finding the depth by inertial measurement from a phone's inertia sensors and camera images
- Training and using a Deep Neural Network to directly predict the PD from an image, with or without an additional reference object in the image and with or without additional input from the sensors. In this case, the first step of extracting the facial landmarks could also be skipped.

For all approaches including images, the determined PD is then provided as an input for the invention to determine the FH using historical data, i.e. the determined PD is retrieved as individually specific pupillary distance of the customer, which differs from prior art, where the FH would be determined from photos as well. Such methods are typically more complex as additional images for information about e.g., ear landmarks are needed for a precise FH and consequently harder for a user to use. For the invention, the PD can also be determined once and re-used for different frames and multiple fallbacks can be offered, for example if the patient is not willing or not able to provide a photo of himself The present invention also refers to a computer program product, comprising a computer readable storage medium storing a program code, the program code being executable by at least one computer unit of a computer system and causing the at least one computer unit to carry out an inventive method as described herein when being executed by a processor of the at least one computer unit.

The present invention also refers to a system, comprising a database with historical data, the historical data being gathered from one or more different data sources and consolidated in one or more historical data items, each historical data item being assigned to a previous customer for a previously customised visual defect correction device and forming a tuple composed of at least a PD; a FH and at least one frame specific feature, and at least one computing unit being connected to the database and being configured for carrying out an inventive method as described herein.

The system may further comprise a provisioning entity that provides the PD of the customer and/or from which the PD of the customer can be retrieved.

The following description is presented to enable any person skilled in the art to make, use and/or practice the disclosed subject matter, and is provided in the context of one or more particular implementations. Various modifications to the disclosed implementations will be readily apparent to those skilled in the art, and the general principles defined herein may be applied to other implementations and applications without departing from the scope of the disclosure. Thus, the present disclosure is not intended to be limited to the described and/or illustrated implementations, but is to be accorded the widest scope consistent with the principles and features disclosed herein.

The details of one or more implementations of the subject matter of this specification are set forth in the accompanying drawings and the description. Other features, aspects, and advantages of the subject matter of the invention will become apparent from the description, the drawings, and the claims.

BRIEF DESCRIPTION OF THE DRAWINGS

FIG. 1 is an exemplary flowchart of an implementation of the invention.

FIG. 2 is the front view of glasses on the eyes.

FIG. 3 is the representation of glasses for the explanation of the frame size designations.

FIG. 4 is a diagram to illustrate linear regression as a FH determination method.

FIG. 5 is a diagram to illustrate polynomial regression as a FH determination method.

DETAILED DESCRIPTION OF THE DRAWINGS

FIG. **1** is an exemplary flowchart of an implementation of the invention. The structure, order or flow for the invention are not mandatory but flexible. This fig- ure contains one possible implementation, while various other implementations of the invention are possible.

**100** is the data source containing the historical data which the invention utilizes. It is the starting point of the left branch. The historical data can come from different data sources like the optician, retailer, manufacturer. Historical data provides information about e.g., ordered glasses, corresponding frame features and lens fitting parameters.

**110** is a conditional operation to decide if a clustering method **115** needs to be applied. In case clustering must be applied following the **YES** path a clustering method **115** is applied. As can be seen a clustering method can be applied multiple times, e.g., at first grouping and followed by classification. Following the **NO** path it can also be skipped in which case binning **120** is the next step.

**115** is a clustering method. Optional clustering methods are grouping, classification and any combinations of the methods.

**120** is a conditional operation to decide if a binning method **125** needs to be applied. Following NO will not apply the binning method **125**.

**125** is the binning method which is applied following the **YES** path from binning **120**. Binning is optional and does prepare individual historical data items for an FH determination method **190** by, e.g. binning historical data items having a similar PD.

**130** is the clusters of historical data which are the result of processing the historical data **100** with optional clustering and optional binning, in which the historical data items can be assigned to clusters and prepared for the FH determination method **190**.

**140** and either **145** or **148** represent the input data which is necessary for a request. The patient selected a frame represented by the selected frame features **140**. Additionally, the PD **198** is necessary which can either be an available PD **145** or can be determined using a PD determination method **178** using patient features **148. 140** is passing the selected frame features to frame features **160** so these could be used by the FH determination method. **140** is also passing the selected frame features to the mapping method **150**.

**145** is the PD, the distance between the center of the pupil and the center of the nose. If decided that a PD is available **175** the available PD **145** can be read out e.g. from an account of the patient which contains a PD which was part of a past order. The available PD **145** is then made available as PD **198** to the FH determination method **190**.

**148** are the input patient features of a request which need to be used if a PD is not available **175** and uses then a PD determination method **190** to determine a PD **198**.

**150** is the mapping method to select a cluster out of the clusters of historical data for the FH determination method **190** based on the selected frame features **140**.

**155** is then the selected cluster of historical data. The cluster of historical data is necessary for the FH determination method **190**.

**160** are the frame features of the frame the patient selected. For these the lens fitting parameters need to be determined. The frame features **160** can be used by the FH determination method **190**.

**170** is the conditional operation to decide if a PD is required by the FH determination method **190**. It is also the starting point of the right branch. There are FH determination methods which are not depending on the PD indicated by the **NO** path. However, other FH determination methods require the PD **198** indicated by the **YES** path.

**175** is a conditional operation to decide if the PD is available **145** or if the PD needs to be determined using a PD determination method **178** from patient features **148**. Patient features are, e.g. an image or a video feed containing the face of patient. Either way the result is a PD **198** provided as input to the FH determination method.

**178** is the PD determination method which is used to determine the PD **198**.

**198** is either matching the available PD **145** or is the result of the PD determination method **178.** The PD **198** is necessary for some FH determination **190** methods. The PD **198** is also the result of the FH determination method **190** and is in this implementation directly passed through.

**190** is the FH determination method which might, depending on the used method, require the frame features **160** of the selected frame the cluster of historical data **155** the selected frame is part of and the PD **198**.

**195** is the FH and the result of the FH determination method **190**.

The exemplary flowchart of an implementation of the invention has two main branches which provide the inputs, frame features **160**, cluster of historical data **155** and PD **198**, for determining the FH using a FH determination method **190**. One of the branches describes the determination of the PD **198**. If the PD is required **170, 175** is the conditional operation to decide if a PD is available. Both the **YES** and **NO** paths are providing the PD **198**, which is required for the FH determination method **190**. The decision is based on whether the PD **145** is available e.g., the patients knowing their PD value, reading it off from the last order or eyeglass prescription or having it stored in user accounts of the optician, retailer, or manufacturer. In those cases, the PD **145** is made directly available as PD **198** to be used by the FH determination method **190**. If the PD is not available, the **NO** path will use a PD determination method **178** to determine the PD **198**. The PD determination method **178** may require patient features **148** to determine the PD. Patient features **148** can e.g., be a frontal image of the patient. Patient features **148** can also be the gender and/or age of a patient, which are used by a statistical PD determination method **178**, resulting in an e.g., average gender-based PD. Some PD determination methods **178** require no patient features **148**, e.g. a general average PD. The result of the PD determination method **178** is the PD **198** which can then be used by the FH determination method **190**.

The left main branch describes the preparation of the cluster of historical data **155**. Raw historical data **100** is optionally clustered and binned. The conditional operations clustering **110** and binning **120** decide whether and how often these preprocessing steps, clustering **115** and binning methods **125**, are applied. These steps output clusters of historical data **130**. Mapping methods **150** optionally select a cluster of the historical data **155** based on frame features **140** of a frame selected by the patient. The FH determination method **190** determines which preprocessing steps are required. If, e.g. no clustering **115**, no binning **125** and no mapping **150** are performed, the cluster of the historical data **155** is the same as the original historical data **100**.

FH determination method **190** is the method which determines the FH based on the cluster of historical data **155**, optionally the frame features **160** and optionally the PD **198**. The results of the FH determination method **190** are the FH **195** and the PD **198**. The cluster of historical data **155** is required by all FH determination methods **190**. For some FH determination methods **190** the PD **198** is required, for others it is not required which is decided in the conditional operation **170**. The frame features **160** are not used in most FH determination methods **190** as the frame features **140** have already been used by the mapping method **150** to select a cluster of historical data **155**. However, there are FH determination methods **190** which require frame features **160**.

The FH determination method **190** can be used repeatedly, e.g. in a fallback case, e.g. caused by an error or not enough historical data being available in a cluster. Another FH determination method can be used in such a case which leads to left and right branch being executed again, as a different kind of clustering **110,** binning **120,** and mapping **150** might be necessary. Eventually the PD requirement **170** might be different than to the other FH determination method **190** used before, but an already calculated PD **198** might also be reused.

FIG. **2** is the front view of a pair of glasses on the eyes.

**200** is the monocular pupillary distance (PD), usually given in mm.

**210** is the HBox, usually given in mm.

**220** is the FH, usually given in mm.

**230** is the VBox, usually given in mm.

The lens fitting parameters are the combination of the pupillary distance **200** as the horizontal measurement and the FH **220** as the vertical measurement. A lens box is described by the HBox as the horizontal width of the lens **210** and the VBox **230** as the vertical height of the lens.

FIG. **3** is the representation of a pair of glasses for the explanation of the size designations.

**300** is the lens width, the measurement refers to the horizontal width for the left and the right lens in mm.

**310** is the bridge width in mm and is the distance between two closest points of the two lenses.

**320** is the lens height, the vertical measurement describes the height of the lenses in mm.

**330** is the temple length, the measurement refers to the length of the temple in mm, including the bend.

The frame size consists of three to four numbers, e.g. "54 - 20 - 130 - 26". The first number, "54", represents the lens width **300;** the second number, "20", refers to the bridge width **310,** the third number, "130", is the temple length **330.** The optional fourth number "26" refers to the lens height **320.**

FIG. **4** is diagram to illustrate linear regression as FH determination method. 9 historical data points and a line showing the relationship between PD and FH are plotted.

**400** is the y-axis showing the FH values in mm.

**410** is the x-axis showing the PD values in mm.

FIG. **5** is diagram to illustrate polynomial regression as a FH determination method. 9 historical data points and a line showing the relationship between PD and FH are plotted.

**500** is the y-axis showing the FH values in mm.

**510** is the x-axis showing the PD values in mm.

**Claims**

1. A computer-implemented method, using a computer system, for determining lens fitting parameters used for manufacturing a customised visual defect correction device for a customer, the customised visual defect correction device comprising a selected frame and customised lenses inserted in the selected frame, and the lens fitting parameters for the customer comprising a pupillary distance, PD, of the customer and a fitting height, FH, for the customer, the method comprising at least the following steps:

   - retrieving, from a provisioning entity, the PD (198) of the customer,
   - retrieving, from a database (100), historical data, the historical data being gathered from one or more different data sources and consolidated in one or more historical data items, each historical data item being assigned to a previous customer for a previously customised visual defect correction device and forming a tuple composed of at least a PD; a FH and at least one frame specific feature,
- performing a FH determination method (190) for determining the FH for the customer, the FH determination method depending on and using the retrieved historical data,
- providing and/or transmitting the FH (195) for the customer and the PD (198) of the customer as lens fitting parameters to a manufacturing facility for manufacturing the customised visual defect correction device for the customer.

2. The method according to claim 1, further comprising the step of compiling and providing the database (100) with the historical data.

3. The method according to claim 1 or 2, wherein at least one frame specific feature is chosen from the group comprising of at least: frame ID, gender, frame type, frame colour, frame size, frame width, frame height, frame depth, lens form, lens type, bridge attribute, bridge height, pantoscopic angle, wrap angle, nose pad, frame geometry, product images, technical information of the frame.

4. The method according to any one of the preceding claims, further comprising the step of clustering (115) the historical data, the clustering comprising a grouping, a classification and/or any combination and order of grouping and classification of the historical data.

5. The method according to claim 4, wherein the FH determination method (195) is performed on a selected cluster of the historical data, the cluster of historical data being selected by one or more frame features (140) of the selected frame.

6. The method according to any one of the preceding claims, further comprising the step of binning (120) the historical data into a plurality of bins, each bin being assigned to a PD value, the PD value being a discrete value.

7. The method according to any one of the preceding claims, further comprising the step of matching(150) frame features (140) of the selected frame and/or patient features of the customer to one or more of the historical data items.

8. The method according to any one of the preceding claims, wherein performing the FH determination method (195) comprises using the FH and at least one frame feature from the retrieved historical data, and utilizing a frequency distribution of the FH in the retrieved historical data to determine the FH for the customer from at least one frame feature (140) of the selected frame.

9. The method according to any one of the preceding claims, wherein performing the FH determination method (195) comprises using a relationship between PD and FH, and at least one frame feature from the retrieved historical data, and utilizing a frequency distribution of the FH in the retrieved historical data to determine the FH for the customer from at least one frame feature (140) of the selected frame and the PD (198) of the customer.

10. The method according to any one of the preceding claims, wherein performing the FH determination method (195) comprises using a relationship between PD and FH, and at least one frame feature from the retrieved historical data, and using a trained machine learning model to determine the FH for the customer from at least one frame feature (140) of the selected frame and the PD (198) of the customer.

11. The method according to any one of the preceding claims, wherein performing the FH determination method (195) comprises using at least one further feature of the customer, particularly an image of the customer, a video of the customer, 3D scan of the customer, the age of the customer, the gender of the customer and/or a nose form of the customer.

12. A computer program product, comprising a computer readable storage medium storing a program code, the program code being executable by at least one computer unit of a computer system and causing the at least one computer unit to carry out a method according to one of claims 1 to 11 when being executed by a processor of the at least one computer unit.

13. A system, comprising a database with historical data, the historical data being gathered from one or more different data sources and consolidated in one or more historical data items, each historical data item being assigned to a previous customer for a previously customised visual defect correction device and forming a tuple composed of at least a PD; a FH and at least one frame specific feature, and at least one computing unit being connected to the database and being configured for carrying out a method according to one of claims 1 to 11.

**FIG. 1**

FIG. 2

FIG. 3

**FIG. 4**

**FIG. 5**

Europäisches
Patentamt

European
Patent Office

Office européen
des brevets

**EUROPEAN SEARCH REPORT**

Application Number

EP 22 18 2694

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2019/339546 A1 (EL-HAJAL BASSEM [CA] ET AL) 7 November 2019 (2019-11-07)<br>* paragraph [0002] *<br>* paragraph [0004] *<br>* paragraph [0018] *<br>* paragraph [0023] *<br>* paragraph [0024] *<br>* paragraph [0025] *<br>* paragraph [0026] *<br>* paragraph [0030] – paragraph [0031] *<br>* paragraph [0034] *<br>* paragraph [0036] – paragraph [0038] *<br>----- | 1-3,7,<br>11-13<br><br>2-10 | INV.<br>G02C13/00<br>G06N20/00 |
| Y | WO 2021/239539 A1 (ZEISS CARL AG [DE]) 2 December 2021 (2021-12-02)<br>* page 3, line 28 – page 4, line 14 *<br>* page 4, line 15 – page 5, line 2 *<br>* page 6, line 26 – page 7, line 4 *<br>* page 15, line 6 – line 16 *<br>* page 18, line 23 – page 20, line 19; figure 6 *<br>----- | 2-10 | |
| Y | EP 3 686 656 A1 (ESSILOR INT [FR]) 29 July 2020 (2020-07-29)<br>* paragraph [0028] – paragraph [0031] *<br>* paragraph [0042] – paragraph [0043] *<br>* paragraph [0051] – paragraph [0053] *<br>----- | 4,5 | TECHNICAL FIELDS SEARCHED (IPC)<br><br>G02C<br>G06Q<br>G06N<br>G06T |
| Y | US 2017/371178 A1 (CRESPO DANIEL [US] ET AL) 28 December 2017 (2017-12-28)<br>* paragraph [0011] *<br>* paragraph [0022] – paragraph [0024] *<br>* paragraph [0036] – paragraph [0040] *<br>* paragraph [0046] – paragraph [0048] *<br>----- | 10 | |

-/--

The present search report has been drawn up for all claims

| Place of search | Date of completion of the search | Examiner |
|---|---|---|
| Munich | 29 November 2022 | Stadlmeyer, R |

EPO FORM 1503 03.82 (P04C01)

page 1 of 2

Europäisches
Patentamt

European
Patent Office

Office européen
des brevets

# EUROPEAN SEARCH REPORT

Application Number

EP 22 18 2694

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2016/313576 A1 (GARDNER KURT MATTHEW [US]) 27 October 2016 (2016-10-27) * paragraph [0022] – paragraph [0023] * * paragraph [0035] * ----- | 1-13 | |
| A | WO 2021/160731 A1 (ESSILOR INT [FR]) 19 August 2021 (2021-08-19) * paragraph [0024] * * paragraph [0027] * * paragraph [0043] – paragraph [0045] * * paragraph [0054] * * paragraph [0070] – paragraph [0075] * * paragraph [0077] – paragraph [0081] * ----- | 1-13 | |
| A | US 2021/271117 A1 (LE CAIN AURELIE [FR] ET AL) 2 September 2021 (2021-09-02) * claim 1 * * paragraph [0084] – paragraph [0110] * * paragraph [0120] * * paragraph [0173] – paragraph [0175] * * paragraph [0180] * ----- | 1-13 | |
| A | WO 2021/170872 A1 (ESSILOR INT [FR]) 2 September 2021 (2021-09-02) * the whole document * ----- | 1-13 | |
| A | US 2015/293382 A1 (JETHMALANI JAGDISH [US] ET AL) 15 October 2015 (2015-10-15) * the whole document * ----- | 1-13 | |

**TECHNICAL FIELDS SEARCHED (IPC)**

The present search report has been drawn up for all claims

| Place of search | Date of completion of the search | Examiner |
|---|---|---|
| Munich | 29 November 2022 | Stadlmeyer, R |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

        ......................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 18 2694

This annex lists the patent family members relating to the patent documents cited in the above-mentioned European search report.
The members are as contained in the European Patent Office EDP file on
The European Patent Office is in no way liable for these particulars which are merely given for the purpose of information.

29-11-2022

| Patent document cited in search report | Publication date | Patent family member(s) | | Publication date |
|---|---|---|---|---|
| US 2019339546 A1 | 07-11-2019 | AU | 2019262151 A1 | 26-11-2020 |
| | | CA | 3098617 A1 | 07-11-2019 |
| | | EP | 3788439 A1 | 10-03-2021 |
| | | US | 2019339546 A1 | 07-11-2019 |
| | | WO | 2019213454 A1 | 07-11-2019 |
| WO 2021239539 A1 | 02-12-2021 | EP | 3916472 A1 | 01-12-2021 |
| | | WO | 2021239539 A1 | 02-12-2021 |
| EP 3686656 A1 | 29-07-2020 | CN | 113272723 A | 17-08-2021 |
| | | EP | 3686656 A1 | 29-07-2020 |
| | | US | 2022113563 A1 | 14-04-2022 |
| | | WO | 2020156823 A1 | 06-08-2020 |
| US 2017371178 A1 | 28-12-2017 | EP | 3474723 A1 | 01-05-2019 |
| | | US | 2017371178 A1 | 28-12-2017 |
| | | WO | 2017222835 A1 | 28-12-2017 |
| US 2016313576 A1 | 27-10-2016 | NONE | | |
| WO 2021160731 A1 | 19-08-2021 | BR | 112022015960 A2 | 11-10-2022 |
| | | CN | 115088004 A | 20-09-2022 |
| | | EP | 4104131 A1 | 21-12-2022 |
| | | WO | 2021160731 A1 | 19-08-2021 |
| US 2021271117 A1 | 02-09-2021 | CN | 112313564 A | 02-02-2021 |
| | | EP | 3598209 A1 | 22-01-2020 |
| | | US | 2021271117 A1 | 02-09-2021 |
| | | WO | 2020016382 A1 | 23-01-2020 |
| WO 2021170872 A1 | 02-09-2021 | BR | 112022015013 A2 | 20-09-2022 |
| | | CN | 115087913 A | 20-09-2022 |
| | | WO | 2021170872 A1 | 02-09-2021 |
| US 2015293382 A1 | 15-10-2015 | US | 2015293382 A1 | 15-10-2015 |
| | | WO | 2015157505 A1 | 15-10-2015 |

EPO FORM P0459

For more details about this annex : see Official Journal of the European Patent Office, No. 12/82

**REFERENCES CITED IN THE DESCRIPTION**

**Patent documents cited in the description**

- WO 2018191784 A1
- WO 2019221618 A1
- US 9529213 B2
- EP 3182877 B1
- WO 2016028901 A1
- CA 3098617 C
- US 8220922 B2
- WO 2018106241 A1
- US 9395562 B1
- US 8733936 B1
- US 8147063 B2